# EUROPÄISCHE PATENTANMELDUNG

(11) **EP 2 685 391 A1**
(43) Veröffentlichungstag der Anmeldung: **15.01.2014**
(21) Anmeldenummer: 12005176.8
(22) Anmeldetag: 13.07.2012
(51) Int. Cl.: G06F 17/30, G06Q 30/02

(54) **Computernetzwerksystem, Server Computer, Service Provider Computer, computerimplementiertes Verfahren und Computerprogrammprodukt zur automatischen Weiterleitung auf eine benutzerspezifische Webseite eines Service Provider Computers bei Anruf einer Webseite eines Provider Computers durch einen Benutzer**

(71) Anmelder: Unister Holding GmbH, 04109 Leipzig (DE)
(72) Erfinder: Wagner, Thomas, 04109 Leipzig (DE); Offen, Leif, 04109 Leipzig (DE); Lietz, Marten, 04109 Leipzig (DE); Bennewitz, Marc, 04109 Leipzig (DE)
(74) Vertreter: Müller-Boré & Partner Patentanwälte

(57) **Zusammenfassung**

Die vorliegende Anmeldung bezieht sich auf ein Computemetzwerksystem, einen Server Computer, einen Service Provider Computer, ein computerimplementiertes Verfahren und ein Computerprogrammprodukt zur automatischen Weiterleitung auf eine benutzerspezifische Webseite eines Service Provider Computerss bei Aufruf einer Website eines Provider Computers durch einen Benutzer. In einer Implementierung umfasst das Computemetzwerksystem
einen Server Computer, welcher ausgebildet ist, ein Computerprogrammskript für eine Vielzahl von Service Provider Computern bereitzustellen und Daten zu den Service Provider Computern zu erfassen;
zumindest einen der Vielzahl von Service Provider Computern derart ausgebildet, das Computerprogrammskript, in die Website des Service Provider Computers einzubinden, um benutzerspezifische Daten zumindest eines Benutzers in Interaktion mit zumindest einer Webseite des Service Provider Computers zu erfassen;
zumindest einen Provider Computer, welcher bei Aufrufen der Website des Provider Computers durch den Benutzer ausgebildet ist, in einem zusätzlichen Browser-Fenster automatisch eine benutzerspezifische Webseite des zumindest einen Service Providers in Abhängigkeit der erfassten benutzerspezifischen Daten und der erfassten Service Provider Daten anzuzeigen.

## Beschreibung

Die vorliegende Erfindung bezieht sich generell auf eine elektronische Anzeige und automatische Weiterleitung von Webseiten im Internet, insbesondere im World Wide Web (WWW). Spezifischer bezieht sich die vorliegende Erfindung auf ein Computernetzwerksystem, einen Server Computer, einen Service Provider Computer, ein computer-implementiertes Verfahren und ein Computerprogrammprodukt zur automatischen Weiterleitung auf eine benutzerspezifische Webseite eines Service Provider Computers bei Aufruf einer Website eines Provider Computers durch zumindest einen Benutzer.

Dadurch dass immer mehr und immer differenziertere Daten und/oder Dienste (engl. Services) wie beispielsweise Suche in spezialisieren Datenbanken, spezialisierten Suchmaschinen, spezialisierten Informationsplattformen, Expertensystemen, etc. im World Wide Web von immer mehr Service Providern angeboten werden, kann es immer wichtiger werden, diese Daten und/oder Dienste Benutzern in einer effizienteren Weise anzuzeigen. Entscheidend kann dabei auch sein, dass solche Daten und/oder Dienste von Service Providern Benutzern im Kontext, also auf das benutzerspezifische Nutzungsverhalten des Benutzers bezogen, angezeigt werden können.

Aufgabe der vorliegenden Erfindung ist es dementsprechend, ein Computernetzwerksystem, einen Server Computer, einen Service Provider Computer, ein computer-implementiertes Verfahren und ein Computerprogrammprodukt vorzusehen, welche effizient benutzerspezifische Daten von Service Providern Benutzern zur Verfügung stellen können, wobei automatisch von Providern auf die entsprechenden Webseiten der Service Provider weitergeleitet werden kann.

Diese Aufgabe wird durch die Gegenstände der unabhängigen Ansprüche gelöst. Bevorzugte Ausführungsformen sind Gegenstand der abhängigen Ansprüche.

Gemäß einer Ausführungsform ist ein Computernetzwerksystem zur automatischen Weiterleitung auf eine benutzerspezifische Webseite eines Service Provider Computers bei Aufruf einer Website eines Provider Computers durch einen Benutzer vorgesehen. Das Computernetzwerksystem umfasst:
einen Server Computer, welcher ausgebildet ist, ein Computerprogrammskript für eine Vielzahl von Service Provider Computern bereitzustellen und Daten zu den Service Provider Computern zu erfassen;
zumindest einen der Vielzahl von Service Provider Computern derart ausgebildet, das Computerprogrammskript, in die Website des Service Provider Computers einzubinden, um benutzerspezifische Daten zumindest eines Benutzers in Interaktion mit zumindest einer Webseite des Service Provider Computers zu erfassen;
zumindest einen Provider Computer, welcher bei Aufrufen der Website des Provider Computers durch den Benutzer ausgebildet ist, in einem zusätzlichen Browser-Fenster automatisch eine benutzerspezifische Webseite des zumindest einen Service Providers in Abhängigkeit der erfassten benutzerspezifischen Daten und der erfassten Service Provider Daten anzuzeigen.

Ein Server Computer wird im Folgenden auch als Server bezeichnet. Entsprechend werden im Folgenden ein Service Provider Computer und ein Provider Computer entsprechend als Service Provider und Provider bezeichnet. Ein Computerprogrammskript wird im Folgenden auch als Skript bezeichnet.

Service Provider Daten umfassen für jede Webseite des Service Providers die in dem Computerprogrammskript zu der jeweiligen Webseite gesetzten Parameter.

Benutzerspezifische Daten umfassen Interaktionen des Benutzers mit einer jeweiligen Webseite innerhalb eines vordefinierten Zeitintervalls, wobei Interaktionen solche Benutzer-Events (bzw. Benutzer-Interaktionen) in einer Webseite umfassen, welche beispielsweise mittels entsprechender Event-Listener automatisch erfasst werden können. Die benutzerspezifischen Daten können auch eine Verweildauer des Benutzers auf der Webseite umfassen. Zur automatischen Bestimmung der benutzerspezifischen Webseite werden die erfassten Service Provider Daten mit den benutzerspezifischen Daten in Beziehung gesetzt und nach vordefinierten Kriterien, welche von Service Provider zu Service Provider verschieden sein können, automatisch ausgewertet und zwar bezüglich der vordefinierten Kriterien. Vordefinierte Kriterien umfassen eine Vielzahl an Constraints (bzw. Bedingungen), die eine Gewichtung der Service Provider Daten und/oder benutzerspezifischer Daten auch zueinander spezifizieren. Folglich kann in Abhängigkeit der gewichteten Service Provider Daten und den entsprechenden gewichteten benutzerspezifischen Daten eine höchstwertigste benutzerspezifische Webseite der benutzerspezifischen Webseiten des Service Providers automatisch bestimmt wird, wobei diese Webseite benutzerspezifische Daten und/oder Service Provider Daten mit einer höchsten Gewichtung zugeordnet sind.

Gemäß einer bevorzugten Ausführungsform werden die zu dem Benutzer erfassten benutzerspezifischen Daten dezentral im Browser des Benutzers gespeichert.

Gemäß einer bevorzugten Ausführungsform werden die zu dem Benutzer erfassten benutzerspezifischen Daten zentral in einer Speichervorrichtung des Servers gespeichert.

Gemäß einer bevorzugten Ausführungsform wird die benutzerspezifische Webseite zu demjenigen der Vielzahl an Service Providern angezeigt, welcher eine höchste Ressourcenkapazität und/oder eine höchste Anzahl an Interaktionen mit dem Benutzer umfasst.

Gemäß einer bevorzugten Ausführungsform umfassen die benutzerspezifischen

Daten erfasste Interaktionen des Benutzers mit Webseiten der Service Provider.

Gemäß einer bevorzugten Ausführungsform umfasst das Computerprogrammskript einen Service-Provider-ID Parameter zur Erfassung der ID des Service Providers, einen URL-Parameter zur Erfassung der benutzerspezifischen Webseiten des Service Providers, einen Query-Parameter zur Erfassung von Keywords zu Webseiten des Service Providers und/oder einen Class-Parameter zur Erfassung von Klassifizierungen der Webseiten des Service Providers für die Erfassung der Service Provider Daten.

Das Computerprogrammskript kann weiterhin noch einen daysOff-Parameter und/oder einen daysLocked-Parameter umfassen.

Gemäß einer bevorzugten Ausführungsform werden die zu dem Service Provider erfassten Keywords mit Keywords zumindest eines weiteren Service Providers verglichen, wobei bei zumindest einem übereinstimmenden Keyword in Abhängigkeit der benutzerspezifischen Daten des Benutzers automatisch eine entsprechende benutzerspezifische Webseite des zumindest einen weiteren Service Providers angezeigt wird.

Keywords umfassen Kategorien, die die Webseiten der Service Provider charakterisieren, wie beispielsweise Flug, Bahn, Urlaub, Hotel, Reisen, Mietwohnungen, Häuser, Gewerbeflächen, Elektroartikel, etc. Keywords können in dem Query-Parameter des Computerprogrammskripts zu den Webseiten des entsprechenden Service Providers gespeichert sein.

Gemäß einer weiteren Ausführungsform ist ein Server Computer zur automatischen Weiterleitung auf eine benutzerspezifische Webseite eines Service Providers bei Aufruf einer Webseite eines Providers durch einen Benutzer vorgesehen. Der Server Computer ist ausgebildet
ein Computerprogrammskript für eine Vielzahl von Service Provider Computern bereitzustellen und Daten zu den Service Provider Computern zu erfassen;
benutzerspezifische Daten zumindest eines Benutzers in Interaktion mit zumindest einer Webseite zumindest eines der Service Provider Computer zu erfassen;
bei Aufrufen einer durch den Server bereitgestellten Weiterleitungsseite in einem durch den Provider zusätzlich geöffneten Browser-Fenster automatisch eine benutzerspezifische Webseite des zumindest einen Service Providers in Abhängigkeit der erfassen benutzerspezifischen Daten und der erfassten Service Provider Daten anzuzeigen.

Eine Website kann ein virtueller Platz im Word Wide Web (WWW) sein, welcher mehrere Webseiten und/oder andere Ressourcen umfassen kann.

Gemäß einer weiteren Ausführungsform ist ein Service Provider Computer mit einem Computerprogrammskript vorgesehen, welches von einem erfindungsgemäßen Server bereitgestellt ist.

Gemäß einer weiteren Ausführungsform ist ein computer-implementiertes Verfahren zur automatischen Weiterleitung auf eine benutzerspezifische Webseite eines Service Provider Computers bei Aufruf einer Website eines Provider Computers durch einen Benutzer vorgesehen. Das Verfahren umfasst die Schritte:
Bereitstellen eines Computerprogrammskripts für eine Vielzahl von Service Provider Computern und Erfassen von Daten zu den Service Provider Computern;
Einbinden des Computerprogrammskripts, in die Website zumindest eines der Service Provider Computer, um benutzerspezifische Daten zumindest eines Benutzers in Interaktion mit zumindest einer Webseite des Service Provider Computers zu erfassen;
automatisches Anzeigen einer benutzerspezifischen Webseite des zumindest eines Service Providers in Abhängigkeit der erfassen benutzerspezifischen Daten und der erfassten Service Provider Daten in einem zusätzlichen Browser-Fenster bei Aufrufen der Webseite des Provider Computers durch den Benutzer.

Das computer-implementierte Verfahren ist bevorzugt ausgebildet, die obigen Systemkomponenten zu implementieren.

Gemäß einer Ausführungsform ist ein Computerprogrammprodukt vorgesehen, welches insbesondere auf einem computerlesbaren Medium gespeichert oder als Signal verwirklicht ist, welches, wenn geladen in den Speicher eines Computers und ausgeführt von einem Computer, bewirkt, dass der Computer ein erfindungsgemäßes Verfahren durchführt.

Bevorzugte Ausführungsformen werden im Folgenden mit Bezug auf begleitende Zeichnungen beispielhaft beschrieben. Es wird angemerkt, dass selbst wenn Ausführungsformen separat beschrieben sind, einzelne Merkmale davon zu zusätzlichen Ausführungsformen kombiniert werden können. Es zeigen:
Figuren 1A und 1B zeigen eine schematische Darstellung eines Systems zur automatischen Weiterleitung auf eine benutzerspezifische Webseite eines Service Providers bei Aufruf einer Website eines Providers durch einen Benutzer.
Figur 2 zeigt ein erstes schematisches Ablaufdiagramm zur Auswahl der Anzeige einer benutzerspezifischen Webseite eines Service Providers in einem zusätzlichen Fenster.
Figuren 3A und 3B zeigen ein zweites schematisches Ablaufdiagramm zur Auswahl der Anzeige einer benutzerspezifischen Webseite eines Service Providers in einem zusätzlichen Fenster.
Figuren 4A und 4B zeigen schematische Diagramme zur Erkennung von Benutzer-Interaktionen in einer Webseite eines Providers und/oder eines Service Providers und insbesondere in einer benutzerspezifischen Webseite.
Figur 5 zeigt ein beispielhaftes Computersystem zur Implementierung eines Systems und entsprechenden Verfahrens zur automatischen Weiterleitung auf eine benutzerspezifische Webseite eines Service Provider Computers bei Aufruf einer Website eines Provider Computers durch zumindest einen Benutzer.

In folgenden werden einige technische Begriffe eingeführt, die in der Anmeldung im Weiteren verwendet werden.

### Browser oder Webbrowser

Ein (Web-)Browser ist ein Computerprogramm, welches auf einem Client bzw. ClientComputer implementiert sein kann, um Websites im World Wide Web, WWW, und/oder allgemein Daten und/oder Dokumente darzustellen. Beispiele für Browser sind Mosaic, Netscape, Internet Explorer, Mozilla Firefox, Opera, Safari. Eine Website kann auch als Webauftritt oder Internetauftritt, Webpräsenz oder Internetpräsenz, Webangebot oder Internetangebot und/oder Internnetplattform oder Webplattform bezeichnet werden. Eine Website kann einen virtuellen Platz im WWW bezeichnen, an dem sich meistens mehrere Webseiten (Dateien) und/oder andere Resourcen befinden. Diese Webseiten können durch eine einheitliche Navigation über Hypertext-Verfahren auf einer Website elektronisch zusammengefasst und/oder verknüpft sein. Mit anderen Worten, eine Website umfasst eine oder mehrere Webseiten, welche durch eine einheitliche Navigation mittels Hypertext-Verfahren zusammengefasst sind. Webseiten können in ein oder mehreren Fenstern, auch als Browserfenster bezeichnet, eines Browsers einem Benutzer angezeigt werden.

Mit anderen Worten, ein Webbrowser bzw. Browser kann ein spezielles Computerprogramme zur Darstellung von Webseiten im World Wide Web und/oder allgemein von Dokumenten und/oder Daten sein. Neben HTML-Seiten können Webbrowser verschiedene andere Arten von Dokumenten, wie zum Beispiel Bilder und/oder PDF-Dokumente, anzeigen. Webbrowser können eine Benutzeroberfläche für Webanwendungen für einen Benutzer anbieten.

### Pop-Under

Ein Pop-Under bzw. Pop-Under Fenster, auch als Side-Under bezeichnet, beschreibt grundsätzlich eine abgewandelte Form eines Pop-Up Fensters, das sich, anders als das Pop-Up Fenster nicht in den Vordergrund drängt, sondern vom Browser im Hintergrund geöffnet wird, so dass ein Benutzer das Pop-Under zunächst nicht sofort wahrnehmen könnte. Das Pop-Under könnte beispielsweise erst dann vom Benutzer bemerkt werden, wenn die aktuelle Website wieder geschlossen wird.

### /Frame

Ein IFrame bzw. Inlineframe bezieht sich grundsätzlich auf ein HTML-Element zur Strukturierung von Webseiten. Ein IFrame kann verwendet werden, um andere und/oder weitere Daten und/oder Inhalte als selbstständige Dokumente innerhalb von Webseiten darzustellen.

### Provider

Ein Provider kann sich auf eine Webpräsenz oder Internetpräsenz beziehen, welche beim Surfen oder Browsen in einer Webseite des Providers externe Seiten, beispielsweise eines Service-Providers, öffnen kann. Beispiele eines Providers sind ein Portal, eine Suchmaschine, ein Publisher, etc. Ein Provider kann in der Form eines Web-Portals (beispielsweise Google, web.de, gmx, yahoo) auf zumindest einem Server implementiert sein.

### Service Provider

Ein Service Provider kann sich auf eine Webpräsenz oder eine Internetpräsenz beziehen, welche in einem der geöffneten Fenster eines Providers angezeigt werden sollte bzw. möchte. Beispiele eines Service Providers sind spezialisierte Suchmaschinen (beispielsweise spezialisiert auf Urlaub, Autos, Flüge, Mietwohnungen), Content-Provider (deutsch: Anbieter von Inhalten/Informationen/Daten) (beispielsweise Nachrichten, Wetter, öffentlicher Nahverkehr, Kino), Expertensysteme, Advertiser, etc.

### Benutzer

Ein Benutzer ist eine Person, welche mittels eines Browsers auf Webseiten eines Providers und/oder eines Service Providers surfen bzw. zugreifen kann. Mit anderen Worten, ein Benutzer ist eine Person, die von ihrem Client bzw. Clientcomputer aus, auf welchem ein Webbrowser, auch als Browser bezeichnet, installiert ist, über ein Netzwerk (beispielsweise das Internet) auf entfernte Internet- bzw. Web-Server, im weiteren als Service Provider und/oder Provider bezeichnet, zugreifen kann.

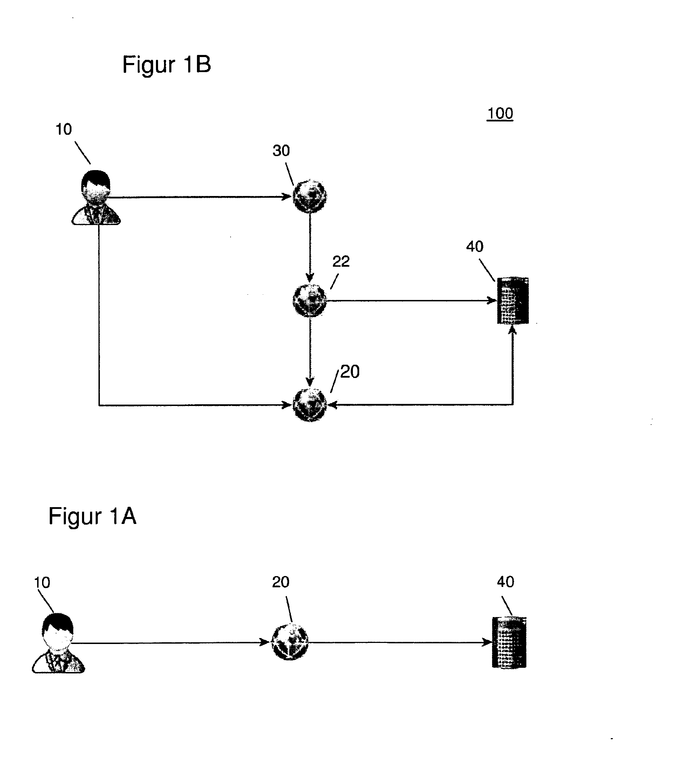

Figur 1A zeigt ein beispielhaftes System zur Erfassung von benutzerspezifischen Daten, wenn ein Benutzer 10 mit einer Webseite eines Service Providers 20 interagiert.

In einer Implementierung können Interaktionen des Benutzers 10 mit Webseiten von einem oder mehreren Service Providern 20 in Beziehung zu dem Benutzer 10 zentral in einer Datenbank auf dem Server 40 und/oder dezentral im Browser des Benutzers 10 gespeichert werden. Benutzerspezifische Daten in einer Webseite eines Service Providers 20 können mittels eines vom Server 40 bereitgestellten Computerprogrammskripts, im weiteren auch Skript genannt, welches in die Webseiten eines Service Providers 20 eingebunden werden kann, erfasst werden.

Figur 1B zeigt ein beispielhaftes System 100 zur Anzeige einer benutzerspezifischen Webseite eines Service Providers 20 innerhalb und/oder bezüglich einer ursprünglich aufgerufenen Webseite eines Providers 30. In einer bevorzugten Implementierung erzeugt der Provider 30, dessen Webseite von einem Benutzer 10 in seinem Browser aufgerufen wurde, zur Anzeige einer benutzerspezifischen Webseite eines Service Providers 20 ein zusätzliches bzw. neues Fenster (beispielsweise eine neue Registerkarte im Browser des Benutzers 10, ein Pop-Up Fenster, ein Pop-Under Fenster oder ein IFrame). In einer bevorzugten Implementierung wird eine Weiterleitung 22 auf eine benutzerspezifische Webseite eines Service Providers 20 durch ein durch den Server 40 bereitgestelltes Skript durchgeführt. In einer bevorzugten Ausführungsform wird die benutzerspezifische Webseite des Service Providers 20 in einem Pop-Under bzw. einem Pop-Under Fenster des vom Benutzer 10 verwendeten Browsers angezeigt.

Das in Figuren 1A und 1B gezeigte System 100 umfasst zur vereinfachten Darstellung des Systems 100 zumindest einen Benutzer 10, zumindest eine benutzerspezifische Webseite eines Service Providers 20, zumindest einen Provider 30 und einen Server 40. In einer bevorzugten Implementierung des Systems 100 können eine Vielzahl verschiedener Benutzer 10, eine Vielzahl verschiedener Service Provider 20 und/oder eine Vielzahl verschiedener Provider 30 implementiert sein. Ein Benutzer 10 interagiert mit einem Service Provider 20 und/oder einem Provider 30 durch einen Browser, welcher auf einem Clientcomputer des Benutzers 10 installiert werden kann.

Daten, welche über einen Benutzer 10 mit Bezug auf Webseiten erfasst und gespeichert werden können, umfassen Interaktionen des Benutzers 10 mit jeweiligen Webseiten von Service Providern 20 bevorzugt innerhalb eines bestimmten Zeitintervalls, beispielsweise einer Stunde, eines Tag, einer Woche, etc. Interaktionen umfassen alle Formen von Interaktionen eines Benutzers mit einem Computerprogramm und insbesondere mit einer Webseite, wie beispielsweise ein Mouse-Klick, ein Bewegen der Mouse über, in und/oder hinaus aus einem Bereich in einer Webseite, eine Eingabe über die Computertastatur, etc. Jede dieser Interaktionen eines jeden Benutzers 10 wird mit Bezug auf die jeweilige Webseite eines jeweiligen Service Providers erfasst, bevorzugt mit einem Zeitstempel und/oder einer Verweildauer in der Webseite ergänzt, und zu dem Benutzer 10 und der jeweiligen Webseite als benutzerspezifische Daten gespeichert. Eine solche Webseite wird im Folgenden dementsprechend als benutzerspezifische Webseite 22 bezeichnet.

Werden in einer bevorzugen Implementierung die über den Benutzer gesammelten Daten dezentral gespeichert, so werden die entsprechenden Daten im Browser des Benutzers 10 gespeichert. Eine solche Implementierung ist an die technischen Möglichkeiten und/oder technischen Einschränkungen des vom jeweiligen Benutzer 10 verwendeten Browsers gebunden. Speichereinheiten, die für eine dezentrale Speicherung der zu einen Benutzer 10 erfassten benutzerspezifischen Daten implementiert sein können, umfassen beispielsweise allgemein bekannte Speicher wie Cookie-basierende Persistenz-Speicher und der mit HTML5 eingeführte Web Speicher oder von Drittanbietern entwickelte Speicher wie beispielsweise der Flash 8 Persistenz-Speicher oder einen auf Google Gears aufbauenden Persistenz-Speicher.

Vorteilhafterweise erlaubt eine dezentrale Speicherung der benutzerspezifischen Daten, dass eine Implementierung der Logik für die Speicherung vollständig in einem Skript, beispielsweise in Javascript implementiert, abgebildet werden kann. Das Skript kann dann zusammen mit erfassten benutzerspezifischen Daten im Browser des Benutzers 10 lokal gespeichert und ausgeführt werden. Dadurch ergibt sich eine hohe Ausfallsicherheit und ein geringer Ressourcenverbrauch auf Seiten des Servers 40. Zudem wird keine weitere Netzwerkkommunikation vom Browser des Benutzers 10 zum Server 40 benötigt, was zu einer geringen Netzwerkauslastung und einer performanteren Ausführung beitragen kann.

Allerdings ist eine dezentrale Speicherung auf den im Browser zur Verfügung gestellten Speicherplatz begrenzt. Weil außerdem die notwendige Implementierungslogik für die Speicherung in einem Skript browserseitig gespeichert ist, ist dies für jeden einsehbar, auch wenn sie durch bestimmte Maßnahmen verschleiert werden kann.

Um den begrenzten Speicherplatz des Browsers bei einer solchen dezentralen Speicherung benutzerspezifischer Daten besser auszunutzen, können Daten in dem jeweils browserseitig implementierten Skript komprimiert werden. In einer bevorzugten Implementierung können dazu Zahlen mittels base36 gespeichert werden. Zusätzlich und/oder alternativ können mehrere Zeitstempel zu den erfassten benutzerspezifischen Daten gespeichert werden, indem lediglich ein Basis-Zeitstempel gespeichert wird zu dem dann jeweils nur eine entsprechende Differenz gespeichert wird. Weiterhin zusätzlich und/oder alternativ können zur Speicherung von benutzerspezifischen Daten eigene (proprietäre) Formate anstelle von standardisierten Formaten verwendet werden, um beispielsweise einen unnötigen Overhead zu vermeiden. Hierzu können beispielsweise Werte anhand eines einfachen Separators als String zusammenführt werden, anstelle diese mittels JSON zu kodieren.

Um eine Einsehbarkeit der im Browser der jeweiligen Benutzer 10 gespeicherten benutzerspezifischen Daten zu verhindern, kann das zur Erfassung und Speicherung des im Browser hinterlegten Skripts verschleiert bzw. verschlüsselt werden, so dass das Skript und die gespeicherten benutzerspezifischen Daten nur mit erhöhtem Aufwand entschlüsselt werden können. In einer bevorzugten Implementierung können bestimmte Bibliotheken von Skriptsprachen (z.B. uglifyJS von Javascript) verwendet werden, um den Skript-Code zu minimieren. Dadurch werden beispielsweise zumindest einige oder alle unnötigen Zeichen entfernt. Weiterhin könnten beispielsweise Variablen, Funktionen und/oder Sprachkonstrukte so umgeschrieben werden, dass die Größe des Programmcodes des Skripts kleiner wird und dieser nur noch mit stark erhöhtem Aufwand gedeutet werden kann. Außerdem und/oder zusätzlich kann der Programmcode des Skripts einen vereinfachten Algorithmus zur symmetrischen Verschlüsselung der gespeicherten Daten umfassen. Da die gespeicherten benutzerspezifischen Daten keine sensitiven Daten enthalten und nur vom Browser des jeweiligen Benutzers 10 selbst und/oder des Servers 40 gelesen werden können, reicht eine stark vereinfachte Art der Verschlüsselung aus, da es hier nur darum geht, den Programmcode des implementierten Skripts zu verschleiern.

Da das Skript zur Erfassung und Speicherung benutzerspezifischer Daten bei der beschrieben dezentralen Speicherung auf Seiten des vom jeweiligen Benutzers 10 verwendeten Browsers ausgeführt werden können muss, ist das Skript zumindest grundlegend vom jeweiligen Benutzer 10 einsehbar.

Werden in einer weiteren bevorzugen Implementierung die erfassten benutzerspezifischen Daten zentral gespeichert, werden diese Daten auf dem entfernten Server 40 gespeichert, beispielsweise in einer mit dem Server 40 verbundenen Speichervorrichtung wie beispielsweise einer Datenbank. Es wird dazu eine Referenz zwischen den erfassten benutzerspezifischen Daten und dem jeweiligen entsprechenden Benutzer 10 hergestellt. Eine solche Referenz kann beispielsweise über eine eindeutige ID, welche im Browser des jeweiligen Benutzers 10 in einem Cookie hinterlegt ist, und/oder über einen Fingerprint des Browsers des Benutzers 10 erfolgen.

Vorteilhafterweise erlaubt eine zentrale Speicherung der benutzerspezifischen Daten, dass sämtliche Daten bezüglich jedem der Benutzer 10 zusammen an einem Ort gehalten werden und dadurch in Beziehung gesetzt werden können. Dadurch ergeben sich weitere Möglichkeiten der Datenanalyse (bspw. Kollaboratives Filtern), Datenverwendung und/oder Datenverarbeitung zur automatischen Weiterleitung auf benutzerspezifische Webseiten des Service Providers 20. Der Speicherplatz ist bei einer zentralen Speicherung im Wesentlichen unbegrenzt, so dass eine nahezu unendliche, ID-anonymisierte Historie der benutzerspezifischen Daten aufgebaut werden kann. Weiterhin kann die Datenstruktur einfach geändert werden.

Bei Interaktionen in dem System 100 müssen die benutzerspezifischen Daten jedes Mal vom Server 40 analysiert werden, um von einer Provider-Webseite auf eine entsprechende benutzerspezifische Webseite eines Service Providers 20 automatisch weiterzuleiten, so dass dies eine höhere Serverauslastung und/oder eine geringere Performance zur Folge haben kann. Wegen der Speicherung an einer zentralen Stelle müssen zusätzliche Hardware-Ressourcen auf dem Server 40 bereitgestellt werden, was ein erhöhtes Ausfallrisiko mit sich bringen kann. Des Weiteren müssen die Daten vom Browser des jeweiligen Benutzers 10 an den Server 40 übertragen werden, was eine erhöhte Netzwerkauslastung zur Folge haben kann.

Vorteilhafterweise können auch dezentral und zentrale Speicherung von benutzerspezifischen Daten insbesondere mit Bezug auf das Surf und/oder Interaktionsverhalten des Benutzers 10 bezüglich verschiedener Webseiten verschiedener Service Provider 20 geeignet kombiniert werden. Somit können Vorteile einer zentralen und einer dezentralen Speicherung effizient ausgenutzt werden.

Solche Interaktionen werden als benutzerspezifische Webseiten 22 der jeweiligen Service Provider 20 zu dem entsprechenden Benutzer 10 zentral auf dem Server 40 und/oder dezentral im Browser des jeweiligen Benutzers 10 gespeichert.

Ein Service Provider 20 kann sich bei dem Server 40 registrieren und ist dann im System 100 erfasst und mittels einer vom Server 40 generierten Service Provider ID eindeutig zuordenbar. Der Service Provider 20 stellt dem Server 40 die dazu notwendigen Daten zur Verfügung. Daten zu einem Service Provider bzw. Service Provider Daten umfassen eine URL des Service Providers 20, eine Ressourcenkapazität des Service Providers 20, eine Anzahl an erfassten Interaktionen von Benutzern 10 mit Webseiten des Service Providers 20 beispielsweise in einem vordefinierten Zeitintervall etc. Eine Ressourcenkapazität des Service Providers 20 kann eine zur Verfügung gestellte Netzwerk-Bandbreite, eine Zugriffsgeschwindigkeit der URL des Service Providers, einem Provider 30 zur Verfügung gestellte und/oder angebotene Ressource, etc. umfassen.

Um benutzerspezifische Daten einer Vielzahl von Benutzern 10 speichern zu können, wird bei jedem Service Provider 20, der in dem System 100 beispielsweise erfasst ist, ein entsprechendes Skript (Programm-Code implementiert in einer Programmiersprache, z.B. Javascript) und/oder ein iFrame installiert. Das Skript wird jedem der Service Provider 20 von dem Server 40 bereitgestellt. Das Skript kann ausgebildet sein, benutzerspezifische Daten von Benutzern 10 aktuell aufgerufener Webseiten des Service Providers 20 zu erfassen, so dass diese benutzerspezifischen Daten dann zu dem jeweiligen Benutzer 10 und in Bezug auf die jeweilige benutzerspezifische Webseite 22 des jeweiligen Service Providers 20 gespeichert werden können. Im Folgenden ist eine beispielhafte Implementierung eines solchen Skripts gezeigt und eine Tabelle der möglichen Parameter, die von dem jeweiligen Service Provider 20 gesetzt werden können.

```
 <script type="text/javascript">
 // ANFANG anzupassender Teil mit Parametern aus nachstehender
 Tabelle
 uAd_suOptions = {
     "serviceProviderId": [Wert],
     "url": [Wert],
     "query": [Wert],
     "class": [Wert],
     "daysLocked": [Wert],
     "daysOff": [Wert]
     };
     // ENDE anzupassender Teil
      
 (function (d) {
 var s = d.createElement('script'), i =
 d.getElementsByTagName('script')[0];
 s.type = 'text/javascript'; s.async = true;
 s.src = location.protocol + "//static.unister-
 adservices.com/services/track.js";
 i.parentNode.insertBefore (s, i);
 })(document);
 </script>
```

| **Parameter** | **Beschreibung** | **Bedeutung** |
|---|---|---|
| serviceProvider Id | Die ID des Service Providers | **Pflichtangabe** |
| url | Die URL, die als Return-Page (Ziel-Webseite) beim Weiterleiten für den entsprechenden Benutzer verwendet werden soll. Falls keine URL übergeben wird, wird automatisch die URL der aktuellen Seite verwendet. | **Wichtig** |
| query | Eine Semikolon-getrennte Aufzählung von Keywords, welche die besuchte Webseite beschreibt. **Beispiel:** "LCD Fernseher;LCD Fernseher Samsung" | **Wichtig** |
| | In einer bevorzugten Implementierung dürfen **maximal 5** mit Semikolon getrennte Keywords (**Keyword-Kombinationen**) je Webseite übergeben werden. | |
| class | **Klassifizierung der Webseite**, die durch den Benutzer aufgerufen wurde (Homepage, Kategorieseite, Produktseite, Warenkorb, Kaufbestätigungsseite). | **Wichtig** |
| | Dieser Parameter definiert die **Wertigkeit** (Werte 1 -10) der aufgerufenen Webseite (URL). Die Klassifizierung der Webseiten muss durch den Service Provider selbst individuell vorgenommen werden. Der Wert 1 stellt einen geringen Wert dar (z.B. nur Homepage), der Wert 9 eine sehr hohe Wertigkeit (Produkt bereits im Warenkorb). | |
| daysLocked | Die Zahl an Tagen, für die der Benutzer gegen Neueinträge dieses Service Providers gesperrt wird. | *Optional* |
| | **Default Einstellung:** 3 | |
| | **Bedingung:** class = 10 | |
| | **Beispiel**: Hat ein Benutzer eine Reise gebucht ("class": 10), benötigt er ggf. noch ein ergänzendes Produkt wie eine Reiseversicherung. Die URL für die Reiseversicherung kann für eine bestimmte Anzahl an Tagen gegen ein Überschreiben gesichert werden. | |
| dayOff | Die Zahl an Tagen, für die das Weiterleiten beim Benutzer deaktiviert oder auch aktiviert wird. Mit einem positiven Wert kann angeben werden, für wie viele Tage der Benutzer bei entsprechenden Weiterleitungen nicht berücksichtigt werden soll. Mit einem negativen Wert kann bestimmt werden, in wie vielen Tagen der Benutzer nicht mehr berücksichtigt werden soll. | *Optional* |
| | Deaktivierung: Hat der Benutzer einen vordefinierten Dienst genutzt, z.B. ein Produkt gekauft, kann es sinnvoll sein, das Weiterleiten bei dem Benutzer (für ein bestimmbares Zeitintervall) zu deaktivieren. → "daysOff":10 | |
| | Aktivierung: Ist der Benutzer z.B. an einem Flug mit Abflugdatum in 4 Tagen interessiert, kann es sinnvoll sein, das Weiterleiten beim Benutzer nur für ein bestimmtes Zeitintervall (hier z.B. 4 Tage) zu aktivieren. → "daysOff":-4 | |
| | Bei "class":10, dann Default Einstellung "daysOff":10 (variabel) | |

Mittels des Skriptes können vom Benutzer 10 besichtigte Webseiten von Service Providern 20 erfasst werden. Weiterhin können die entsprechenden benutzerspezifischen Daten zu diesen Webseiten erfasst werden. Solche Webseiten werden auch als benutzerspezifische Webseiten bezeichnet. Dabei kann jeweils die URL einer benutzerspezifischen Webseite eines Service Providers 20 gespeichert werden. Weiterhin kann diese URL klassifiziert werden. Dazu können in einer bevorzugten Implementierung die oben aufgeführten Parameter verwendet werden. Weiterhin erkennt das Skript, ob die entsprechende benutzerspezifische Webseite in Interaktion mit einem Provider 30 aufgerufen und geöffnet wurde. Dazu wird in diesem Fall ein Indikator (z.B. ein Flag) im Browser des Benutzers 10 gespeichert, welcher nach Erkennen einer erfolgten Weiterleitung 22 zu dieser benutzerspezifischen Webseite des Service Providers 20 von dem Skript wieder zurückgesetzt wird (beispielsweise auf FALSE).

In einer bevorzugten Implementierung bindet das Skript beispielsweise per Javascript einen iFrame auf der Website des Service Providers 20 ein, welches ein entsprechend weiteres Skript mit den gesetzten Parametern aufruft. Dieses weitere Skript verarbeitet die zu den Parametern gespeicherten benutzerspezifischen Daten, welche über den Benutzer 10 in seiner Interaktion mit der Website des Service Providers 20 erfasst wurden und speichert diese im Browser unter der Domain des Servers 40 und/oder direkt auf dem Server 40. Dies ist notwendig, damit die benutzerspezifischen Daten zu einem späteren Zeitpunkt beim Öffnen der entsprechenden benutzerspezifischen Webseite des Service Providers 20 gelesen werden können.

Mit anderen Worten, dadurch dass das Skript mit einer vordefinierten URL per iFrame in die Webseite eines Service Providers 20 eingebunden werden kann, können benutzerspezifische Daten durch das beim Service Provider 20 eingebundene Skript webseitenübergreifend vom Browser eines entsprechenden Benutzers 10 geschrieben und/oder gelesen werden.

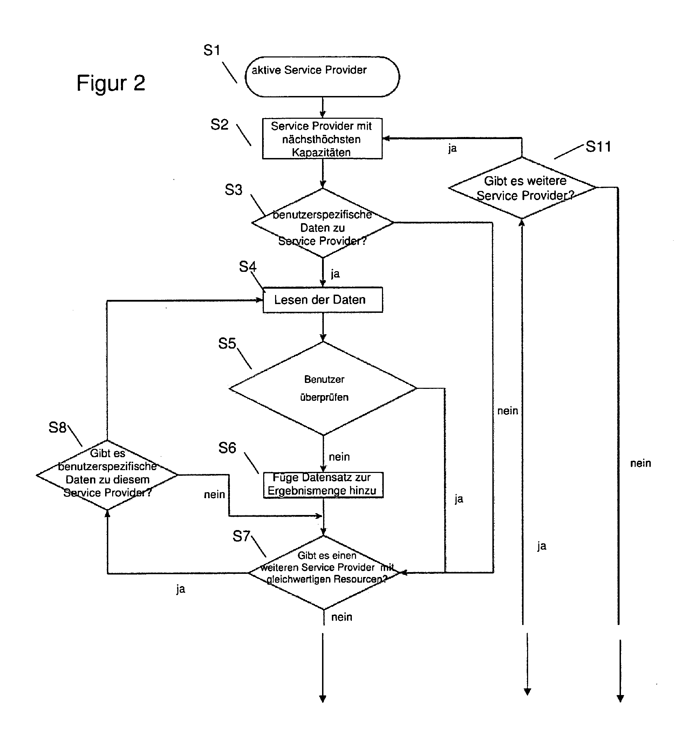

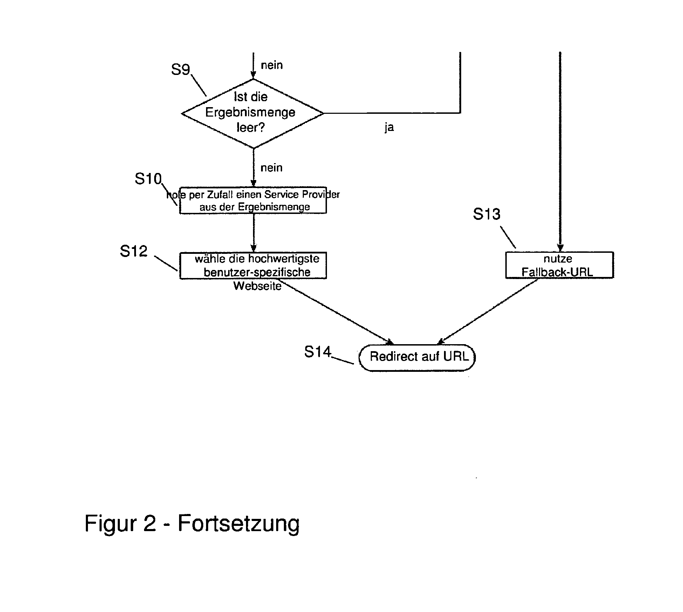

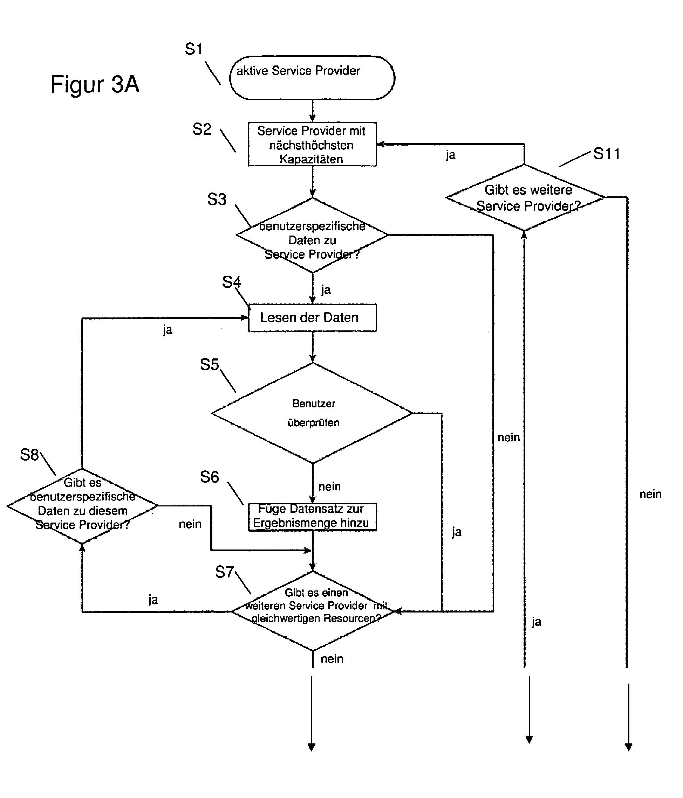

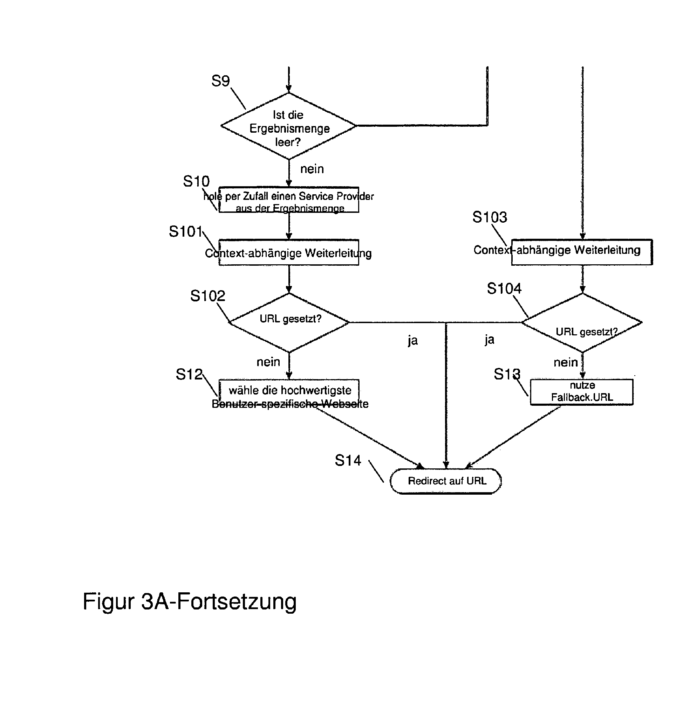

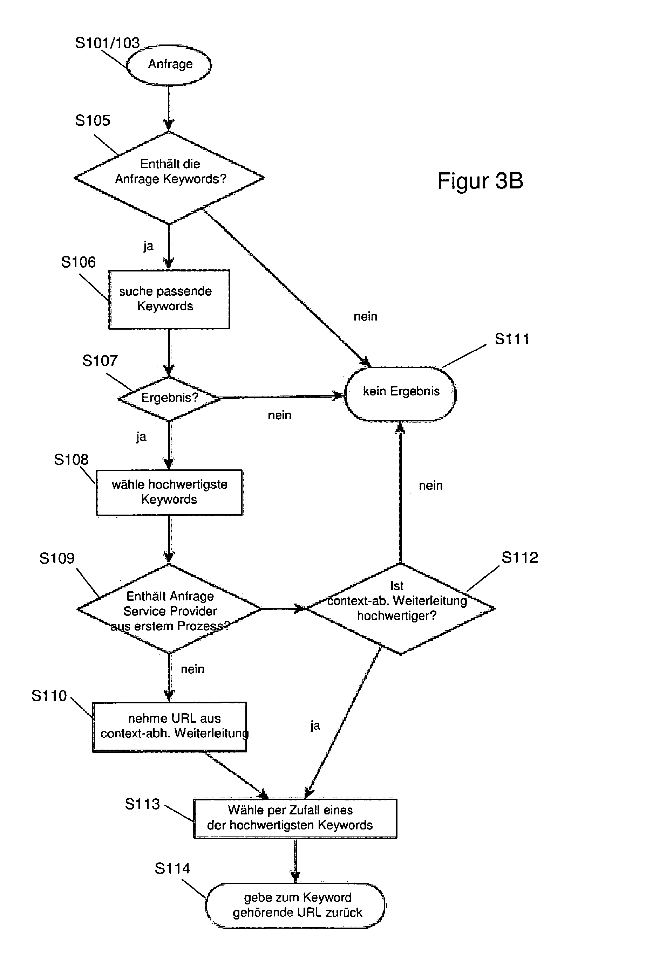

Öffnet ein Benutzer 10, zu dem entsprechende benutzerspezifische Daten zu benutzerspezifischen Webseiten von Service Providern 20 auf dem Server 40 gespeichert wurden, die Webseite eines Providers 30, wird innerhalb und/oder bezüglich der Webseite des Providers 30 automatisch eine entsprechende benutzerspezifische Webseite eines der Service Provider 20, in einem zusätzlichen Fenster (Pop-Under oder Pop-Up), angezeigt. Um eine bestimmte benutzerspezifische Webseite eines bestimmten Service Providers 20 auszuwählen, wertet der Server 40 die zu dem Benutzer 10 gespeicherten benutzerspezifischen Daten und/oder zu den Service Providern 20 gespeicherte Daten (im Folgenden auch Service Provider Daten genannt) aus. Eine Anzeige der ausgewählten benutzerspezifischen Webseite erfolgt über ein Erstellen der entsprechenden eindeutigen URL zu dieser Webseite und ein Weiterleiten und Anzeigen dieser URL in dem zusätzlichen Fenster. Eine automatische Auswahl einer benutzerspezifischen Webseite, wenn der Benutzer 10 eine Webseite eines Providers 30 aufruft, ist nachstehend mit Bezug auf Figuren 2, 3A und 3B beschrieben. Damit der Provider 30 eine benutzerspezifische Webseite eines Service-Providers 20 anzeigen kann muss der Provider 30 eine eigens dafür bereitgestellte URL des Servers 40 aufrufen. In der bevorzugten Implementierung, wird von dem Provider 30 die folgende URL aufgerufen:

```
 http://static.unister-
 adservices.com/services/redirect.html?pub=[Wert]&site=[Wert]
```

Dabei müssen in einer bevorzugten Ausführungsform die in nachstehender Tabelle spezifizierten Parameter durch den Provider 30 gesetzt werden:

| **Name** | **Beschreibung** | **Bedeutung** |
|---|---|---|
| Pub | die Provider Id | **Pflichtangabe** |
| Site | die Id der Website | **Pflichtangabe** |

Das in der Webseite eines Service Providers 20 eingebundene Skript ist ausgebildet, automatisch zu erkennen, dass eine benutzerspezifische Webseite 22 des Service Providers 20 in einem dem Provider 30 zugeordneten Fenster (z.B. ein Pop-Up oder ein Pop-Under Fenster) angezeigt wird und zwar auch dann, wenn diese Daten nur in einem iFrame einer anderen Domain, beispielsweise der Domain des Providers 30 bereitgestellt sind. Dies kann in einer bevorzugten Implementierung dadurch erreicht werden, dass das vom Skript erzeugte iFrame per HTML5-PostMessage eine Nachricht an das äußere bzw. ursprünglich aufgerufene Fenster des Providers 30 sendet, beispielsweise: window.parent.postMessage. In einer weiteren bevorzugten Implementierung kann eine entsprechende Nachricht mittels Fragment-Toggling an das äußere bzw. ursprünglich aufgerufene Fenster des Providers 30 gesendet werden, beispielsweise: window.parent.location.hash = "#meldung". Die an zweiter Stelle genannte Implementierung kann beispielsweise dann verwendet werden, wenn HTML5-PostMessages nicht vom Browser des Benutzers 10, der die Website des Providers 30 aufgerufen hat, unterstützt wird.

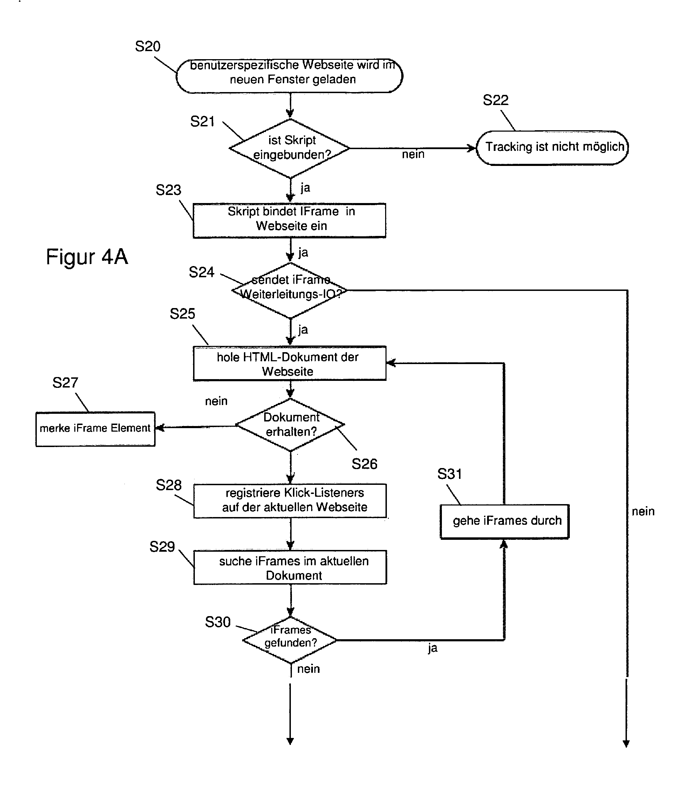

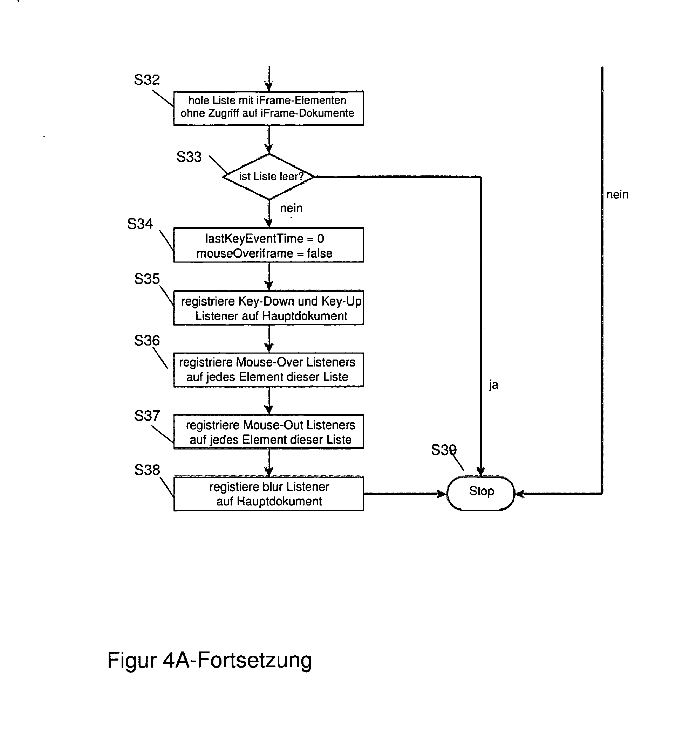

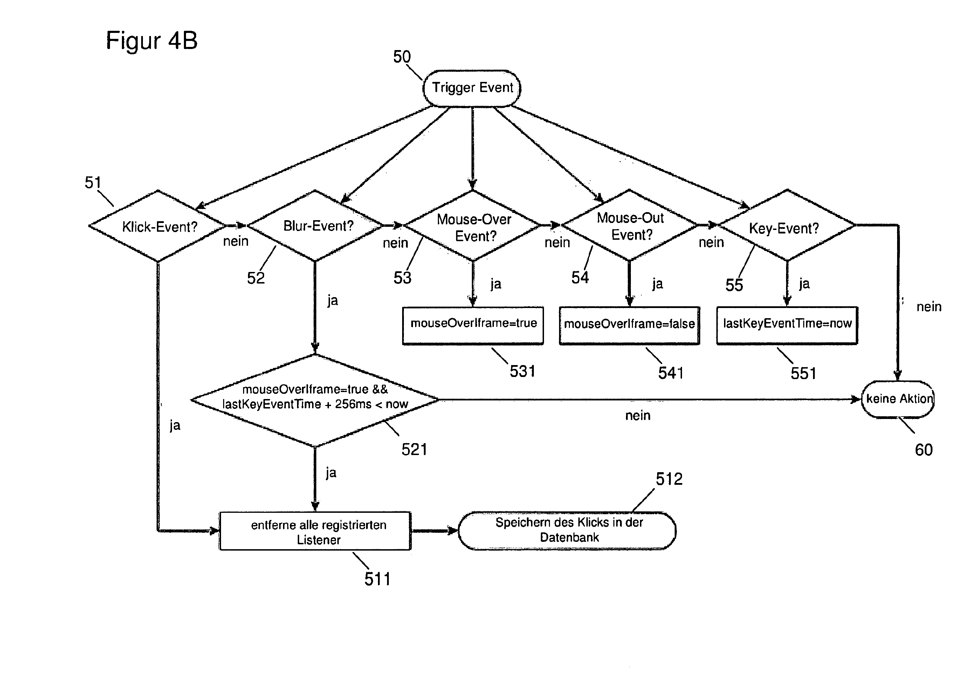

Interagiert der Benutzer 10 in der zusätzlich zu der Website des Providers 30 angezeigten benutzerspezifischen Webseite eines entsprechenden Service Providers 20, so können diese Interaktionen automatisch erfasst, verarbeitet (beispielsweise gezählt) und bei dem Service Provider 20 und/oder auf dem Server 40 gespeichert werden. In einer bevorzugen Ausführungsform wird ein Schließen der benutzerspezifischen Webseite nicht als Interaktion erfasst. Automatisches Erfassen und/oder Verarbeiten von Interaktionen eines Benutzers 10 mit einer benutzerspezifischen Webseite wird mit Bezug auf Figuren 4A und 4B beschrieben. In einer bevorzugten Implementierung werden Interaktionen des Benutzers 10 mit der angezeigten benutzerspezifischen Webseite erfasst, wenn das beim Service Provider 20 installierte Skript erkannt hat, das im Browser des Benutzers 10 ein entsprechendes Flag auf TRUE gesetzt ist.

**Figur 2** zeigt eine erste Implementierung zur automatischen Auswahl und Anzeige einer benutzerspezifischen Webseite eines Service Providers 20, wenn der Benutzer 10 eine Webseite eines Providers 30 aufruft.

Das mit Bezug auf Figur 2 beschriebene Verfahren verwendet und/oder verarbeitet benutzerspezifischen Daten, die zu den jeweiligen Benutzern 10 mit Bezug auf die von dem jeweiligen Benutzer 10 erfassten Interaktionen mit zumindest einer Webseite zumindest eines Service Providers 20 erfasst und entsprechend zentral und/oder dezentral gespeichert sind. Die benutzerspezifischen Daten werden verarbeitet, um automatisch eine benutzerspezifische Webseite eines ausgewählten Service Providers 20 für den entsprechenden Benutzer zu ermitteln. Beispielsweise wird aus den von dem Benutzer innerhalb eines vordefinierten Zeitintervalls (z.B. eine Stunde, ein Tag, eine Woche, eine Browser-Session des Benutzers 10 etc.) von einem Service Provider 20 besuchten Webseiten diejenige als benutzerspezifische Webseite ermittelt, für welche die meisten Interaktionen des Benutzers 10 mit der Webseite registriert wurden. In einem anderen Beispiel werden nicht nur die meisten erfassten benutzerspezifischen Daten in einem Zeitintervall zur Bestimmung der benutzerspezifischen Webseite berücksichtigt, sondern auch einen oder mehrere der in dem Skript mit Bezug auf Figur 1 spezifizierten Parameter für die jeweilige Webseite. Dabei kann beispielsweise eine Webseite mit einem höheren Class-Parameter entsprechend höher gewichtet werden. Auch kann nach den spezifizierten Keywords in dem Query-Parameter eine benutzerspezifische Webseite bestimmt werden. Weiterhin können der daysLocked-Paramter und/oder der daysOff-Paramter berücksichtigt werden, soweit diese vom Service Provider 20 für die entsprechende Webseite gesetzt sind. Somit kann beispielsweise eine Webseite mit Class-Parameter = 8, den Keywords, also Query-Parameter = Urlaub, Ziele, Flug, für die benutzerspezifischen Daten in einer Verweildauer von 14 Minuten und einer Anzahl von 20 erfassten Interaktionen als benutzerspezifische Webseite des Service Providers 20 vor einer Webseite mit Query-Parameter = Urlaub, Ziele, Zeitraum, einem Class-Parameter = 7 und benutzerspezifischen Daten mit Verweildauer = 21 Minuten und 17 erfassten Interaktionen bestimmt werden. Beispielsweise wird hier der Class-Parameter und die Keywords in den Server Provider Daten höher gewichtet als die Gesamtverweildauer des Benutzers 10 in den erfassten benutzerspezifischen Daten.

Mit anderen Worten, Service Provider Daten umfassen für jede Webseite des Service Providers 20 die in dem Skript (siehe oben bei Figur 1) zu der jeweiligen Webseite gesetzten Parameter. Benutzerspezifische Daten umfassen Interaktionen des Benutzers 10 mit einer jeweiligen Webseite innerhalb eines vordefinierten Zeitintervalls, wobei Interaktionen solche Benutzer-Events in einer Webseite umfassen, welche mittels entsprechender Event-Listener automatisch erfasst werden können, wie mit Bezug auf Figuren 4A und 4B beschrieben. Die benutzerspezifischen Daten können auch eine Verweildauer des Benutzers 10 auf der Webseite umfassen. Zur automatischen Bestimmung der benutzerspezifischen Webseite werden die erfassten Service Provider Daten mit den benutzerspezifischen Daten in Beziehung gesetzt und nach vordefinierten Kriterien, welche von Service Provider zu Service Provider verschieden sein können, automatisch ausgewertet und zwar bezüglich der vordefinierten Kriterien. Vordefinierte Kriterien umfassen beispielsweise, dass ein Class-Paramter = 10 höher gewichtet wird als alle anderen Parameter und/oder benutzerspezifische Daten, solange zumindest eine Klick-Interaktion (bzw. ein Klick-Event) des Benutzers 10 in der entsprechenden Webseite erfasst wurde.

Das Weiterleiten kann, wie mit Bezug auf Figur 1 beschrieben, durch Anzeigen einer ermittelten benutzerspezifischen Webseite in einem zusätzlichen Fenster (z.B. Pop-Up oder Pop-Under) des Providers 30 erfolgen. Die benutzerspezifische Webseite, auf die automatisch (gemäß zuvor beschriebenem Bestimmungsverfahren) weitergeleitet wird, kann im Folgenden auch als höchstwertigste benutzerspezifische Webseite bezeichnet werden.

In Schritt S1 werden, wenn ein Benutzer 10 eine Webseite eines Providers 30 in seinem Browser öffnet, aktuelle Daten zu jedem im System 100 erfassten und/oder registrierten Service Provider 20 vom Server 40 abgefragt. Insbesondere wird festgestellt, welche der erfassten Service Provider 20 aktiv sind und dementsprechend an einem aktuellen Auswahlverfahren teilnehmen. Aktivität eines Service Providers 20 kann durch ein entsprechend zu dem Service Provider 20 im Server 40 gespeicherten und auf TRUE gesetzten Flag ermittelt werden. Weiterhin kann ermittelt werden, ob der Benutzer 10 bereits auf eine benutzerspezifische Webseite eines der aktiven Service Provider 20 weitergeleitet wurde. Wird ein Service Provider 20 als inaktiv erkannt oder wird für einen Service Provider 20 ein vom entsprechenden Service Provider vordefiniertes Limit (Anzahl an bereits erfolgten Weiterleitungen in einem vorangegangen Zeitintervall) überschritten, so wird der entsprechende Service Provider 20 als inaktiv erkannt und für eine weitere Auswahl nicht mehr betrachtet.

In Schritt S2 wird aus allen als aktiv ermittelten Service Providern 20 derjenige mit einer höchsten Ressourcenkapazität (z.B. Netzwerkbandbreite, Erreichbarkeit, Verfügbarkeit, Anzahl an bereitgestellten Inhalten und/oder Daten, Anzahl an dem Provider 30 und/oder dem Server 40 bereitgestellten Ressourcen, etc.) und/oder einer höchsten Anzahl an Interaktionen mit dem Benutzer 10 und/oder einer Vielzahl von Benutzern 10 innerhalb eines vordefinierten Zeitintervalls ermittelt. Sind Ressourcenkapazitäten und/oder Benutzerinteraktionen per Zeitintervall für mehr als einen der Service Provider 20 gleich, S7, so kann einer dieser per Zufallsgenerator bestimmt werden, S9 bzw. S10.

Ist in Schritt S2 ein Service Provider 20 aus der Menge der aktiven Service Provider 20 bestimmt worden, so werden zu diesem Service Provider 20 die zu dem Benutzer 10 gespeicherten benutzerspezifischen Daten abgefragt, S3.

In Schritt S3 bzw. S8 werden zu dem ermittelten Service Provider 20 benutzerspezifische Daten, welche zu dem Benutzer 10 gespeichert sind, abgefragt. Diese benutzerspezifischen Daten werden verarbeitet, S4. Dabei kann insbesondere ermittelt werden, ob der Service Provider 20 ein Weiterleiten in den benutzerspezifischen Daten deaktiviert hat und/oder ob eine Anzahl an Weiterleitungen innerhalb eines vordefinierten Zeitintervalls für den Benutzer 10 bereits überschritten ist, S5. Diese Daten können in einer bevorzugen Implementierung in den daysLocked- und/oder daysOff-Parametern des in der Webseite des Service-Providers installierten Skripts, wie mit Bezug auf Figur 1 beschrieben, gespeichert sein. Ist dies der Fall, so findet keine Weiterleitung des Benutzers 10 zu diesem Service Provider 20 statt. Anderenfalls, werden die ermittelten benutzerspezifischen Daten für das weitere Verfahren gespeichert, S6. Sind Ressourcenkapazitäten und/oder Benutzerinteraktionen per Zeitintervall für mehr als einen der Service Provider 20 gleich, S7, so werden zu diesen Service Providern 20 ebenso die entsprechenden benutzerspezifischen Daten erfasst S8, die Schritte S4, S5 und S6 für diese Datensätze entsprechend ausgeführt und einer dieser Service Provider 20 kann dann per Zufallsgenerator ermittelt werden, S9, S10, wenn zumindest ein solcher Service Provider 20 ermittelt werden konnte. Andernfalls werden die zuvor beschriebenen Verfahrensschritte für einen nächsten Service Provider 20 mit nächst höherer Ressourcenkapazität und/oder Benutzerinteraktionen per Zeitintervall ermittelt, S11.

Ist ein Service Provider 20 ermittelt worden, so wird die URL einer benutzerspezifische Webseite des Service Providers 20 ermittelt, auf die der Benutzer 10 in dem vom Provider erzeugten zusätzlichen Fenster (Pop-Up oder Pop-Under) des Providers 30 weitergeleitet wird, S12, um die entsprechende benutzerspezifische Webseite in diesem Fenster anzuzeigen, S14.

Kann kein aktiver Service Provider 20 ermittelt werden, so wird von der aufgerufenen Webseite des Providers 30 auf eine Webseite mit einer vordefinierten (default) URL im weiteren Fenster (Pop-Up oder Pop-Under) weitergeleitet, S13.

In einer bevorzugten Implementierung kann eine höchstwertigste benutzerspezifische Webseite(also die benutzerspezifische Webseite 22, auf die automatisch weitergeleitet wird) unter Berücksichtigung eines oder mehrerer vordefinierter Kriterien des wie oben beschriebenen Auswahlverfahrens bezüglich der erfassten benutzerspezifischen Daten des Benutzers 10 und den durch das gemäß Figur 1 definierte Skript erfassten Service Provider Daten (bzw. Daten zu dem Service Provider 20) automatisch bestimmt werden, S12. Die vordefinierten Kriterien für das Auswahlverfahren sind in einer bevorzugten Ausführungsform im Server 40 definiert und gespeichert. Vordefinierte Kriterien können beispielsweise umfassen: Service Provider Daten bezüglich des Class-Parameters und/oder des Query-Paramters werden höher gewichtet als benutzerspezifische Daten. Benutzerspezifische Daten, welche einen Klick-Event in einer hoch-gewichteten Webseite umfassen, werden entsprechend noch höher gewichtet, etc. Diese vordefinierten Kriterien können von den Service Providern 20 in Abhängigkeit ihrer Webseiten bestimmt werden und entsprecht definiert sein. Mit anderen Worten, die vordefinierten Kriterien umfassen eine Vielzahl von automatisch verarbeitbaren Bedingungen (Constraints), bezüglich benutzerspezifischer Daten und Service Provider Daten zu jeweiligen Webseiten der jeweiligen Service Provider 20, welche eine Gewichtung der benutzerspezifischen Webseiten erzeugen, um daraus eine höchstwertigste benutzerspezifische Webseite zur Anzeige zu bestimmen.

**Figuren 3A** **und** **3B** zeigen eine zweite Implementierung zur automatischen Auswahl einer benutzerspezifischen Webseite eines Service Providers 20, im Rahmen einer vom entsprechenden Benutzer 10 aufgerufenen Webseite eines Providers 30.

**Figur 3A** zeigt eine weitere alternative und/oder zusätzliche Ausführungsform zu dem in Figur 2 gezeigten computer-implementierten Verfahren. Die Schritte S1 bis S14 entsprechen den in Figur 2 gezeigten Verfahrensschritten S1 bis S14 mit der entsprechenden obigen Beschreibung, so dass eine Wiederholung dieser selben Verfahrensschritte an dieser Stelle nicht erfolgt.

Zusätzlich zu den in Figur 2 gezeigten Verfahrensschritten umfasst das in Figur 3A gezeigte computer-implementierte Verfahren die Schritte S101, S102, S103 und S104, welche im Folgenden beschrieben werden.

Nachdem ein Service Provider 20 ermittelt wurde, S10 bzw. wenn kein Service Provider 20 ermittelt werden konnte, S11, wird in Schritt S101 bzw. in Schritt S103 überprüft, ob eine context-abhängige Weiterleitung zu einer spezifischen Webseite implementiert ist, S102 bzw. S104. Ist dies nicht der Fall, wird die benutzerspezifische Webseite ermittelt, S12 bzw. auf die vordefinierte (default) URL, S13, weitergeleitet, S14. Ist dies der Fall, so werden die vom ausgewählten Service Provider 20 angegebenen Keywords für die jeweilige Webseite, welche bevorzugt im Query-Parameter des beim Service Provider 20 installierten Skripts, wie mit Bezug auf Figur 1 gezeigt, definiert sind, mit Keywords im Server 40 verglichen, um dem Benutzer 10 eine zum Keyword passende benutzerspezifische Webseite eines anderen (zweiten) Service Providers 20 anzeigen lassen zu können. Der erste Service Provider 20, welcher in dem vorangehenden Verfahren automatisch ermittelt wurde und die Keywords übermittelt, dient hier als Vermittler an einen zweiten Service Provider 20 mit entsprechenden Keywords. Keywords, also als Query-Parameter spezifizierte Werte können beispielsweise eine Kategorie (z.B. Suchmaschine) und/oder Inhalte der entsprechenden Webseite spezifizieren, wie z.B. Flüge, Bahnfahrten, Kaufangebote im Bereich Elektronik, Bücher, Bekleidung, etc., Mietwohnungssuche, Wohnungs-/Häuser-Verkäufe, etc.

Wird beispielsweise durch die zu dem Benutzer 10, der die Webseite des Providers 30 aufgerufen hat, erfassten benutzerspezifischen Daten ermittelt, dass der Benutzer nach Flügen nach Rom bei einem ersten Service Provider 20 gesucht hat, wird beispielsweise das Keyword Flug, entsprechend hoch gewichtet und nach weiteren in dem Server 40 registrierten Service Providern 20 mit entsprechend spezifizierten Keywords (hier Flug) gesucht und auf eine entsprechende benutzerspezifische Webseite eines der weiteren Service Provider 20 weitergeleitet. Dementsprechend, wird dem Benutzer 10 eine verbesserte Suchmöglichkeit und eine effizientere Suche in spezialisierten Datenbanken ermöglicht. Suchergebnisse können somit verbessert und dem Benutzer 10 effizienter zur Verfügung gestellt werden.

**Figur 3B** zeigt eine bevorzugte Implementierung einer keyword-abhängigen Auswahl des entsprechenden Service Providers 20 und einer dazugehörigen benutzerspezifischen Webseite, wenn die benutzerspezifischen Daten des Benutzers 10 Keywords enthalten.

Es werden die Keywords aus den benutzerspezifischen Daten des Benutzers 10 geholt S105, die vorher von mindestens einem Service Provider über den Parameter "query" erfasst wurden. Diese Keywords werden mit Keywords im Server 40 verglichen S106, die von mindestens einem weiteren Service Providern dort hinterlegt wurden. Wenn es keine Übereinstimmungen gibt, dann wird dieser Prozess abgebrochen, S111, und auf die URL des in S10 ermittelten Service Providers oder eine Fallback URL S13 weitergeleitet. Andernfalls werden aus der Übereinstimmung die Keywords geholt, welche am hochwertigsten sind (beispielsweise durch eine vordefinierte Gewichtung und/oder basierend auf den benutzerspezifischen Daten des Benutzers 10) S108. Die Kapazität dieser Keywords wird mit der Kapazität des in S10 ermittelten Service Providers verglichen und falls die Keywords eine höhere Kapazität haben, wird ein Keyword per Zufall gewählt, S113, zu welchem dann die dazugehörige, auf dem Server 40 hinterlegte URL, ermittelt wird, S114, und auf welche dann weiter geleitet wird, S14. Andernfalls wird dieser Prozess abgebrochen, S111, und auf die URL des in S10 ermittelten Service Providers oder eine Fallback URL S13 weitergeleitet.

**Figuren 4A** **und** **4B** zeigen eine Implementierung zur Erkennung von Benutzer-Interaktionen in einer Webseite eines Service Providers 20.

**Figur 4A** zeigt eine bevorzugte Implementierung eines computer-implementierten Verfahrens zum automatischen Erkennen, Erfassen und Verarbeiten von Benutzer-Interaktionen in einer benutzerspezifischen Webseite eines Service Providers 20, welche in einem zusätzlichen Fenster (Pop-Up oder Pop-Under) zu einem Fenster zur Anzeige einer vom Benutzer 10 angefragten Webseite eines Providers 30 gemäß eines automatischen Auswahlverfahrens, wie in Figuren 2, 3A und 3B gezeigt, angezeigt wird, S20. In einer bevorzugten Implementierung erzeugt ein vom Server 40 bereitgestellte Skript einen iFrame auf der benutzerspezifischen Webseite.

Bei der Weiterleitung auf die benutzerspezifische Webseite, wird eine eindeutige ID für diese Weiterleitung erzeugt. Diese ID wird zusammen mit den erfassten benutzerspezifischen Daten des entsprechenden Benutzers 10 gespeichert und zusammen mit Daten über die Anfrage des Benutzers 10 auf dem Server 40 gespeichert. Bei einer Interaktion des Benutzers 10 mit dieser Webseite 22 wird die entsprechende ID aus den benutzerspezifischen Daten ausgelesen und zusammen mit Daten über die Anfrage des Benutzers 10 auf dem Server 40 gespeichert. Diese Daten werden anhand dieser eindeutigen ID für den Benutzer 10 und die jeweilige Webseite kombiniert und/oder verarbeitet.

Zunächst wird überprüft, ob in der Webseite ein geeignetes Skript (z.B. das Skript, welches mit Bezug auf Figur 1 beschrieben ist) eingebunden ist, S21. Ist dies nicht der Fall, so können Interaktionen des Benutzers 10 mit der Webseite nicht erfasst und verarbeitet werden, S22. Das Skript der Webseite bindet dann in dem zusätzlichen Fenster einen iFrame ein, S23. In Schritt S24 wird überprüft, ob der iFrame die entsprechende eindeutige ID der Weiterleitung gesendet hat. Ist dies nicht der Fall, so stoppt der Prozess, S39, andernfalls wurde eine Weiterleitung erkannt und im nächsten Schritt das HTML-Dokument der Webseite zur Analyse geholt, S25.Konnte das HTML-Dokument korrekt gelesen werden, S26, so werden auf dem HTML-Dokument Klick-Listener registriert, S28. Des weiteren werden alle iFrames des Dokuments gesucht und auf deren HTML-Dokumenten, soweit möglich, ebenfalls Klick-Listener registriert, S29-S31 und S25, S26 und S28. Dieser Vorgang wiederholt sich rekursiv für alle lesbaren HTML-Dokumente der iFrames.

Eine Liste mit den gefundenen iFrame-Elementen, deren HTML-Dokumente nicht geholt und auf denen dementsprechend auch keine Klick-Listener registriert werden konnten, wird dann generiert und verwendet, S32, um Event-Listener auf den Elementen selbst zu registrieren, um Interaktionen des Benutzers in der benutzerspezifischen Webseite, welche in dem zusätzlichen Fenster des Providers 30 angezeigt wird, zu erfassen und/oder zu der benutzerspezifischen Webseite und dem entsprechenden Benutzer 10 über die eindeutige ID der Weiterleitung beispielsweise auf dem Server 40 zu speichern. Die iFrame-Elemente haben einen Pointer und/oder Link zu den darin entsprechend eingebundenen iFrame-Dokumenten (also den Inhalten, welche in der Webseite angezeigt werden).

Sollte diese Liste leer sein, S33, so stoppt der Prozess, S39. Andernfalls, werden für die Elemente der Liste Listener zum erfassen und/oder speichern von Interaktionen des Benutzers 10 mit der benutzerspezifischen Webseite installiert, S34, S35, S36, S37, S38. Interaktionen eines Benutzers 10 mit einer Webseite 22, welche erfasst werden können, umfassen Klick-Events, Blur-Events, Mouse-Over-Events, Mouse-Out-Events und/oder Key-Events. Zu diesen Events werden die zur automatischen Erfassung der Events notwendigen Listener auf den entsprechenden iFrame-Elementen der Webseite initialisiert. In Schritten S34 und S35 wird zur Initialisierung von Key-Events eine lastKeyEventTime auf 0 und ein mouseOverIFrame auf false gesetzt, S34. Zudem werden Key-Down und Key-Up Listener auf der Webseite registriert, installiert und/oder initialisiert, S35. Ebenso werden Mouse-Over Listener, S36, und Mouse-Out Listener, S37, auf jedem der iFrame-Elemente aus der Liste für die Webseite registriert, installiert und/oder initialisiert. Auf der Webseite wird ein Blur-Listener für entsprechende Events registriert, installiert und/oder initialisiert, S38.

Ein Erfassen von Interaktionen eines Benutzers in einer Webseite zur Laufzeit, also wenn der Benutzer 10 mit der Webseite interagiert, ist mit Bezug auf Figur 4B beschrieben. Beispielsweise können in den, wie in Figur 4A gezeigt, erfassten und mit entsprechenden Listener installierten, iFrame-Elementen der Webseite verschiedene Interaktionen (bzw. Events) des Benutzers 10 in der Webseite erfasst und/oder zu der Webseite und dem entsprechenden Benutzer 10 beispielsweise über die eindeutige ID der Weiterleitung auf dem Server 40 gespeichert werden.

Ein solches Event bzw. Interaktion eines Benutzers 10 in einer Webseite, welches durch die, wie mit Bezug auf Figur 4A beschriebenen, entsprechend initialisierten Listener automatisch erfasst und beispielsweise mit Bezug auf den Benutzer 10 und die entsprechende Webseite auf dem Server 40 gespeichert wird, kann als Trigger-Event 50 bezeichnet werden. Ein Trigger-Event 50 umfasst ein Klick-Event 51, ein Blur-Event 52, ein Mouse-Over Event 53, ein Mouse-Out Event 54 oder ein Key-Event 55. Sobald beispielsweise zumindest ein Klick-Event 51 als Interaktion des Benutzers 10 in der Webseite durch den entsprechenden Listener erfasst wird, werden die in der Webseite initialisierten Listener entfernt, 511, und der zumindest eine erfasste Klick des Benutzers 10 in die Webseite wird in Assoziation zu dem Benutzer 10, der entsprechenden Webseite und der ID der Weiterleitung in einer Datenbank des Servers 40 gespeichert. Wird ein Blur-Event 52 erfasst, so wird überprüft, ob ein mouseOverlframe auf true gesetzt ist und ob eine lastKeyEventTime innerhalb eines bestimmten Zeitintervalls, beispielsweise der letzten 256 ms, liegt. Ist dies nicht der Fall, so wird erfasst, das keine Interaktion des Benutzers 10 mit der Webseite erfasst wurde, 60. Andernfalls werden die in der Webseite initialisierten Listener entfernt, 511, und der zumindest eine erfasste Klick des Benutzers 10 in die Webseite wird in Assoziation zu dem Benutzer 10 und der entsprechenden Webseite in einer Datenbank des Servers 40 gespeichert. Wird ein Mouse-Over Event 53 des Benutzers 10 in der Webseite erfasst, so wird das entsprechende Flag gesetzt: mouseOverIframe=true, 531. Wird ein Mouse-Out Event 54 des Benutzers 10 in der Webseite erfasst, so wird das entsprechende Flag auf false gesetzt: mouseOverIframe=false, 541. Wird ein Key Event 54 des Benutzers 10 in der Webseite erfasst, so wird der entsprechende Zeitpunkt erfasst, lastKeyEventTime=now, 551.

Wird kein Event durch die registrierten Event-Listener erkannt, so wird keine Interaktion mit der Webseite erfasst.

Dementsprechend können in einer bevorzugten Implementierung Interaktionen, insbesondere Klicks eines Benutzers 10, in einer benutzerspezifischen Webseite dadurch automatisch erfasst werden, dass Klick-Events 51 auf der gesamten Webseite und auf allen in der Webseite erfassten Unter-Webseiten (den entsprechenden iFrames) abgefangen werden. Um sicherzustellen, dass möglichst viele oder alle Klick-Events 51 in der Webseite erfasst werden, werden Mouse-Over-Events 53 und Mouse-Out-Events 54 eines Benutzers 10 abgefangen, mit dessen Hilfe automatisch erkannt wird, ob sich die Maus des Benutzers 10 über eines dieser Unter-Webseiten befindet. Zudem werden Key-Up und Key-Down-Events 55 des Benutzers 10 abgefangen, um sicher zu stellen, dass das nachfolgende Event durch keine Tastaturaktionen ausgelöst wurde. Nun wird das Blur-Event 52 der Eltern-Webseite (die Unter-Webseite umfassenden Webseite) abgefangen. Da das Blur-Event 52 ausgelöst wird, wenn eine andere Unter-Webseite den Fokus erhält, kann man nun feststellen, ob das Blur-Event 52 ausgelöst wurde, weil der Benutzer 10 innerhalb einer Unter-Webseite geklickt hat.

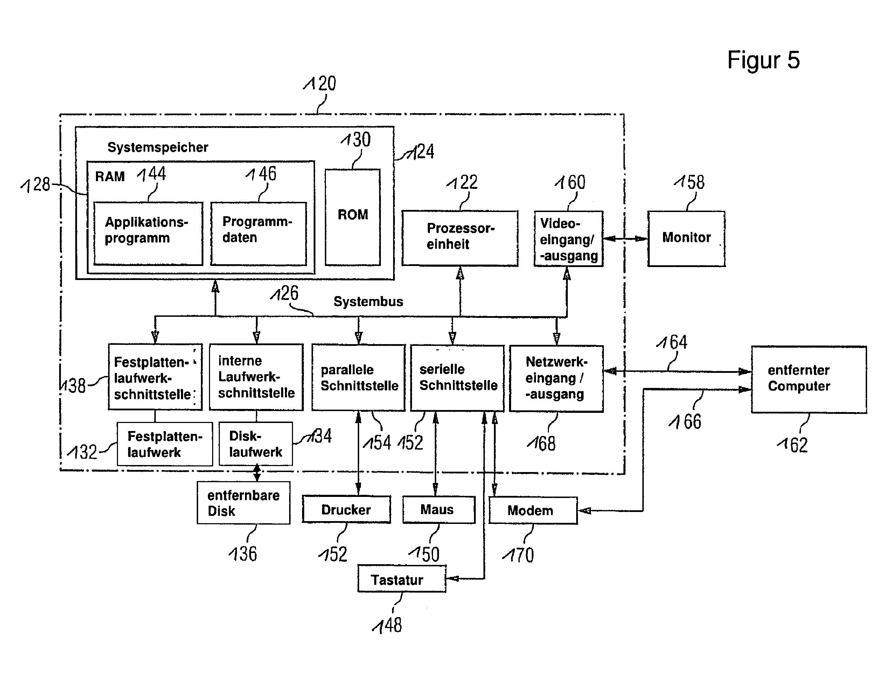

Mit Bezug auf Figur 5 wird ein beispielhaftes System zum Implementieren der Erfindung beschrieben. Ein beispielhaftes System umfasst eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122, verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-System (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielhaft beschriebene Umgebung eine Festplatte (nicht gezeigt) und eine externe Disk 142 verwendet, ist für den Fachmann offensichtlich, dass andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw.

Eine Vielzahl von Programm-Modulen, insbesondere ein Betriebssystem (nicht gezeigt), ein oder mehrere Applikationsprogramme 144 oder Programm-Module (nicht gezeigt) und Programmdaten 146 können auf der Festplatte, der externen Disk 142, dem ROM 130 oder dem RAM 128 gespeichert werden. Die Applikationsprogramme können zumindest einen Teil der Funktionalität, wie in Figur 1 bis 4B gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 3 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 3 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

- 10: Benutzer
- 20: Service Provider
- 22: Weiterleitung bzw. Weiterleitungsseite
- 30: Provider
- 40: Server
- 100: System
- S1-S13: Weiterleiten auf eine benutzerspezifische Webseite eines Service Providers
- S101-S114: context-abhängige Weiterleitung zu einer spezifischen Webseite
- S20-S39: Erfassen und Verarbeiten von Interaktionen
- 50: Trigger-Event
- 51: Klick-Event
- 52: Blur-Event
- 53: Mouse-Over Evetn
- 54: Mouse-Out Event
- 55: Key-Event
- 551: Listener entfernen
- 512: Benutzer-Interaktion speichern
- 521: Abfrage
- 531: Flag setzen
- 541: Flag zurücksetzen
- 551: Zeitstempel
- 60: keine Interaktion
- 120: Rechnerumgebung
- 122: Prozessoreinheit
- 124: Systemspeicher
- 126: Systembus
- 128: random access memory (RAM)
- 130: Nur-Lesespeicher (ROM)
- 132: Festplattenlaufwerk
- 134: Disklaufwerk
- 136: entfernbare Disk
- 138: Festplattenlaufwerkschnittstelle
- 140: Disklaufwerkschnittstelle
- 142: externe Disk
- 144: Applikationsprogramm
- 146: Programmdaten
- 148: Tastatur
- 150: Computermaus/Trackball
- 152: serielle Schnittstelle
- 154: parallele Schnittstelle
- 156: Drucker
- 158: Monitor
- 160: Videoeingang/ -ausgang
- 162: entfernter Computer
- 164: "local area network" (LAN)
- 166: "wide area network" (WAN)
- 168: Netzwerkeingang/ -ausgang

## Patentansprüche

1. Computemetzwerksystem (100) zur automatischen Weiterleitung auf eine benutzerspezifische Webseite eines Service Provider Computers (20) bei Aufruf einer Website eines Provider Computers (30) durch einen Benutzer (10), das Computemetzwerksystem umfassend:
einen Server Computer (40), welcher ausgebildet ist, ein Computerprogrammskript für eine Vielzahl von Service Provider Computern (20) bereitzustellen und Daten zu den Service Provider Computern (20) zu erfassen;
zumindest einen der Vielzahl von Service Provider Computern (20) derart ausgebildet, das Computerprogrammskript, in die Website des Service Provider Computers (20) einzubinden, um benutzerspezifische Daten zumindest eines Benutzers (10) in Interaktion mit zumindest einer Webseite des Service Provider Computers (20) zu erfassen;
zumindest einen Provider Computer (30), welcher bei Aufrufen der Website des Provider Computers (30) durch den Benutzer (10) ausgebildet ist, in einem zusätzlichen Browser-Fenster automatisch eine benutzerspezifische Webseite des zumindest einen Service Providers (20) in Abhängigkeit der erfassten benutzerspezifischen Daten und der erfassten Service Provider Daten anzuzeigen.

2. Computernetzwerksystem nach Anspruch 1, wobei die zu dem Benutzer (10) erfassten benutzerspezifischen Daten dezentral im Browser des Benutzers (10) gespeichert werden.

3. Computernetzwerksystem nach Anspruch 1 oder 2, wobei die zu dem Benutzer (10) erfassten benutzerspezifischen Daten zentral in einer Speichervorrichtung des Server Computers (40) gespeichert werden.

4. Computemetzwerksystem nach einem oder mehreren der vorangegangenen Ansprüche, wobei aus der Vielzahl von Service Providem (20) die benutzerspezifische Webseite zu demjenigen der Vielzahl an Service Providern (20) angezeigt wird, welcher eine höchste Ressourcenkapazität und/oder eine höchste Anzahl an Interaktionen mit dem Benutzer (10) umfasst.

5. Computemetzwerksystem nach einem oder mehreren der vorangegangenen Ansprüche, wobei die benutzerspezifischen Daten erfasste Interaktionen des Benutzers (10) mit Webseiten der Service Provider Computer (20) umfassen.

6. Computemetzwerksystem nach einem oder mehreren der vorangegangenen Ansprüche, wobei das Computerprogrammskript einen Service-Provider-ID Parameter zur Erfassung der ID des Service Provider Computers, einen URL-Parameter zur Erfassung der benutzerspezifischen Webseiten des Service Provider Computers (20), einen Query-Prameter zur Erfassung von Keywords zu Webseiten des Service Provider Computers (20) und/oder einen Class-Parameter zur Erfassung von Klassifizierungen der Webseiten des Service Provider Computers (20) für die Erfassung der Service Provider Daten umfasst.

7. Computernetzwerksystem nach Anspruch 6, wobei die zu dem Service Provider Computer (20) erfassten Keywords mit Keywords zumindest eines weiteren Service Provider Computers (20) verglichen werden, wobei bei zumindest einem übereinstimmenden Keyword in Abhängigkeit der benutzerspezifischen Daten des Benutzers (10) automatisch eine entsprechende benutzerspezifische Webseite (20) des zumindest einen weiteren Service Provider Computers angezeigt wird.

8. Server Computer (40) zur automatischen Weiterleitung auf eine benutzerspezifische Webseite eines Service Provider Computers (20) bei Aufruf einer Website eines Provider Computers (30) durch einen Benutzer (10, wobei der Server Computer (40) ausgebildet ist
ein Computerprogrammskript für eine Vielzahl von Service Provider Computern (20) bereitzustellen und Daten zu den Service Provider Computern (20) zu erfassen;
benutzerspezifische Daten zumindest eines Benutzers (10) in Interaktion mit zumindest einer Webseite des Service Provider Computers (20) zu erfassen;
bei Aufrufen einer durch den Server (40) bereitgestellten Weiterleitungsseite (22) in einem durch den Provider (30) zusätzlich geöffneten Browser-Fenster automatisch eine benutzerspezifische Webseite des zumindest einen Service Providers (20) in Abhängigkeit der erfassen benutzerspezifischen Daten und der erfassten Service Provider Daten anzuzeigen.

9. Service Provider Computer (20) mit einem Computerprogrammskript, welches von einem Server Computer (40) gemäß Anspruch 8 bereitgestellt ist.

10. Computer-implementiertes Verfahren zur automatischen Weiterleitung auf eine benutzerspezifische Webseite eines Service Provider Computers (20) bei Aufruf einer Website eines Provider Computers (30) durch einen Benutzer (10), das das computer-implementierte Verfahren umfassend:
Bereitstellen eines Computerprogrammskripts für eine Vielzahl von Service Provider Computern (20) und Erfassen von Daten zu den Service Provider Computern (20);
Einbinden des Computerprogrammskripts, in die Website zumindest eines der Vielzahl von Service Provider Computern (20), um benutzerspezifische Daten zumindest eines Benutzers (10) in Interaktion mit zumindest einer Webseite des Service Provider Computers (20) zu erfassen;
automatisches Anzeigen einer benutzerspezifischen Webseite des zumindest einen Service Provider Computers (20) in Abhängigkeit der erfassen benutzerspezifischen Daten und der erfassten Service Provider Daten in einem zusätzlichen Browser-Fenster bei Aufrufen der Website des Provider Computers (30) durch den Benutzer (10).

11. Computer-implementiertes Verfahren nach Anspruch 10, wobei die zu dem Benutzer (10) erfassten benutzerspezifischen Daten dezentral im Browser des Benutzers (10) gespeichert werden und/oder wobei die zu dem Benutzer (10) erfassten benutzerspezifischen Daten zentral in einer Speichervorrichtung des Server Computers (40) gespeichert werden.

12. Computer-implementiertes Verfahren nach Anspruch 10 oder 11, die benutzerspezifische Webseite zu demjenigen der Vielzahl an Service Providern (20) angezeigt wird, welcher eine höchsten Ressourcenkapazität und/oder eine höchsten Anzahl an Interaktionen mit dem Benutzer (10) umfasst.

13. Computer-implementiertes Verfahren nach einem oder mehreren der Ansprüche 9 bis 11, wobei die benutzerspezifischen Daten erfasste Interaktionen des Benutzers (10) mit Webseiten der Service Provider Computer (20) umfassen.

14. Computer-implementiertes Verfahren nach einem oder mehreren der Ansprüche 10 bis 13, wobei das Computerprogrammskript einen Service-Provider-ID Parameter zur Erfassung der ID des Service Provider Computers, einen URL-Parameter zur Erfassung der benutzerspezifischen Webseiten des Service Provider Computers (20), einen Query-Prameter zur Erfassung von Keywords zu Webseiten des Service Provider Computers (20) und/oder einen Class-Parameter zur Erfassung von Klassifizierungen der Webseiten des Service Provider Computers (20) für die Erfassung der Service Provider Daten umfasst.

15. Computerprogrammprodukt, insbesondere auf einem computerlesbaren Medium gespeichert oder als Signal verwirklicht, welches, wenn geladen in den Speicher eines Computers und ausgeführt von einem Computer, bewirkt, dass der Computer ein Verfahren nach einem oder mehreren der Ansprüche 10 bis 14 durchführt.
